# EUROPÄISCHE PATENTSCHRIFT

(11) **EP 2 205 868 B1**
(45) Veröffentlichungstag und Bekanntmachung des Hinweises auf die Patenterteilung: **12.09.2012**
(21) Anmeldenummer: 08786512.7
(22) Anmeldetag: 28.07.2008
(51) Int. Cl.: F04B 1/04, B60T 8/00

(54) **PUMPE, INSBESONDERE FÜR EIN HYDRAULIKAGGREGAT EINER ELEKTRONISCH REGELBAREN FAHRZEUGBREMSANLAGE**
PUMP, PARTICULARLY FOR A HYDRAULIC UNIT OF AN ELECTRONICALLY CONTROLLED VEHICLE BRAKE UNIT
POMPE DESTINÉE EN PARTICULIER À UNE UNITÉ HYDRAULIQUE D'UN SYSTÈME DE FREINAGE DE VÉHICULE À RÉGLAGE ÉLECTRONIQUE

(30) Priorität: 28.09.2007 DE 202007013618 U
(43) Veröffentlichungstag der Anmeldung: 14.07.2010
(73) Patentinhaber: Robert Bosch GmbH, 70442 Stuttgart (DE)
(72) Erfinder: KARL, Martin, 71732 Tamm (DE); FELLMETH, Reiner, 74354 Besigheim (DE); SCHMAUTZ, Oliver, 71720 Oberstenfeld (DE); STOTZ, Rolf, 71665 Vaihingen (DE)
(86) Internationale Anmeldenummer: PCT/EP2008/059871
(87) Internationale Veröffentlichungsnummer: WO 2009/043619

(56) Entgegenhaltungen:
- EP-A- 0 298 254
- WO-A-00/46503
- WO-A-01/31198
- WO-A-2004/029453
- DE-A1- 10 118 060
- DE-A1- 19 648 319
- DE-A1- 19 906 839

## Beschreibung

### Stand der Technik

Die Erfindung geht aus von einer Pumpe, insbesondere für ein Hydraulikaggregat einer elektronisch regelbaren Fahrzeugbremsanlage, nach der Gattung des unabhängigen Patentanspruchs 1.

Eine derartig aufgebaute Pumpe ist beispielsweise bekannt aus der DE 196 48 319 A1, die den nächstkommenden Stand der Technik darstellt, der WO 01/31198 A, der WO 2004/029453 A, der DE 101 18 060 A1 oder der älteren DE- Patentanmeldung mit der Anmeldenummer 102006016897.6. Diese Pumpen weisen jeweils u.a. ein Pumpengehäuse mit einem Exzenterraum auf, in dem ein Exzenterlager angeordnet ist. Der Exzenterraum wird von einer sacklochartigen Motorbohrung gebildet. Am Pumpengehäuse ist ein elektrischer Antriebsmotor angeflanscht, der das Exzenterlager zu einer Rotationsbewegung antreibt. Das rotierende Exzenterlager treibt im Pumpengehäuse untergebrachte Pumpenelemente zu einer hin- und hergehenden Hubbewegung an. Von den Pumpenelementen wird hydraulisches Druckmittel gefördert.

Wenn eine dieser Pumpen beispielsweise als Teil eines ABS-Systems und/oder eines ESP-Systems ausgeführt ist, können während des Pumpenbetriebes aufgrund einer durch enge Spalte in einem Exzenterraum verursachten Kapillarwirkung geringe Mengen an Bremsflüssigkeit aus den Pumpenelementen austreten und direkt in das Exzenterlager eindringen. Die in das Exzenterlager eingetretene Bremsflüssigkeit kann über das Antriebslager weiter in den elektrischen Antriebsmotor transportiert werden. Zudem verhindert die o.g. Kapillarwirkung das Ablaufen der Bremsflüssigkeit in eventuell vorhandene Leckagetaschen.

Ein Eindringen von Bremsflüssigkeit in den elektrischen Antriebsmotor kann zu erhöhten Stromwerten bzw. verstärktem Bürstenablauf führen. Im Extremfall kann durch die eindringende Bremsflüssigkeit im elektrischen Antriebsmotor ein Kurzschluss und damit einen Ausfall des elektrischen Antriebsmotors verursacht werden. Ein Eindringen von Bremsflüssigkeit in das Exzenterlager und/oder das Antriebslager kann zum Auswaschen des Fettes und daraus resultierend zu erhöhtem Lagerverschleiß führen.

Zur Behebung dieses Problems werden deshalb Ausgleichsmittel vorgeschlagen, die den Exzenterraum des Exzenterlagers vergrößern. Bei den bekannten Ausgleichsmitteln handelt es sich beispielsweise um eine Ringnut, die am Grund einer den Exzenterraum bildenden, sacklochartig ausgeführten Motorbohrung ausgebildet ist. Die Ausgleichsmittel verhindern bzw. erschweren eine Kapillarwirkung zwischen dem Exzenterraum und dem Exzenterlager und unterbrechen einen Übertragungspfad für eine Leckageflüssigkeit vom Exzenterraum in einen elektrischen Antriebsmotor der Pumpe. Durch die Ausgleichsmittel werden enge Spalte im Exzenterraum vermieden, so dass die Gefahr der Kapillarwirkung reduziert werden kann und ein Eindringen von Flüssigkeit vom Exzenterraum ins Exzenterlager nahezu vollständig verhindert werden kann.

Aus der WO 00/46503 A1 ist es schließlich bekannt, bei einer Pumpe Leckageflüssigkeit über einen im Pumpengehäuse ausgebildeten Ablauf ins Freie abzuführen. Dieser Ablauf mündet von einer Zylinderbohrung aus, in welcher eine Kolbenpumpe aufgenommen ist.

### Offenbarung der Erfindung

Die erfindungsgemäße Pumpe mit den Merkmalen des Anspruchs 1 offenbart zusätzliche Ausgleichsmittel zur Unterbrechung des erläuterten Übertragungspfads. Es wird vorgeschlagen, dass die Ausgleichsmittel wenigstens einen Hinterstich umfassen, der an der Wandung der Motorbohrung angeordnet ist und zwar in einem Bereich dieser Wandung, der sich zwischen dem Antriebslager des Antriebsmotors und dem Exzenterlager befindet. Dieser Bereich der Wandung stellt die kürzeste mögliche Verbindung zwischen einem der Pumpenelemente und dem Antriebslager des Antriebsmotors dar und ist deshalb hinsichtlich eines potentiellen Übertritts von Leckageflüssigkeit besonders gefährdet.

Die vorgeschlagenen Ausgleichsmittel lassen sich bei der ohnehin erforderlichen spanenden Bearbeitung des Pumpengehäuses ohne wesentlichen Zusatzaufwand oder Zusatzkosten herstellen. Sie benötigen keinen zusätzlichen Bauraum, so dass keine weiteren Veränderungen im Pumpengehäuse, beispielsweise im Bezug auf die Anordnung eines Antriebswellenlager erforderlich sind, welches ein generelles Tiefersetzen der Motorbohrung zur Vergrößerung des Exzenterraums verhindert.

Durch die in den übrigen Unteransprüchen aufgeführten Maßnahmen und Weiterbildungen sind vorteilhafte Verbesserungen der im unabhängigen Patentanspruch angegebenen Pumpe möglich.

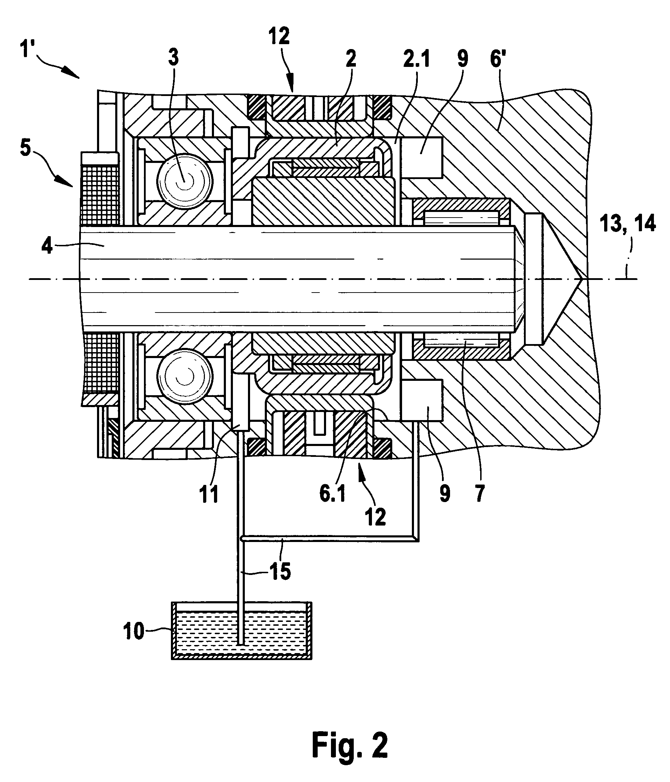

Vorteilhafte, nachfolgend beschriebene Ausführungsformen der Erfindung sind in Figur 2 der Zeichnungen dargestellt.

Kurze Beschreibung der Zeichnungen
Fig. 1 zeigt als Längsschnitt einen Ausschnitt einer herkömmlichen, ohne Ausgleichsmittel auskommenden, Pumpe für ein Hydraulikaggregat.
Fig. 2 zeigt anhand eines Längsschnitts einen Ausschnitts einer erfindungsgemäßen Pumpe für ein Hydraulikaggregat.

### Ausführungsform(en) der Erfindung

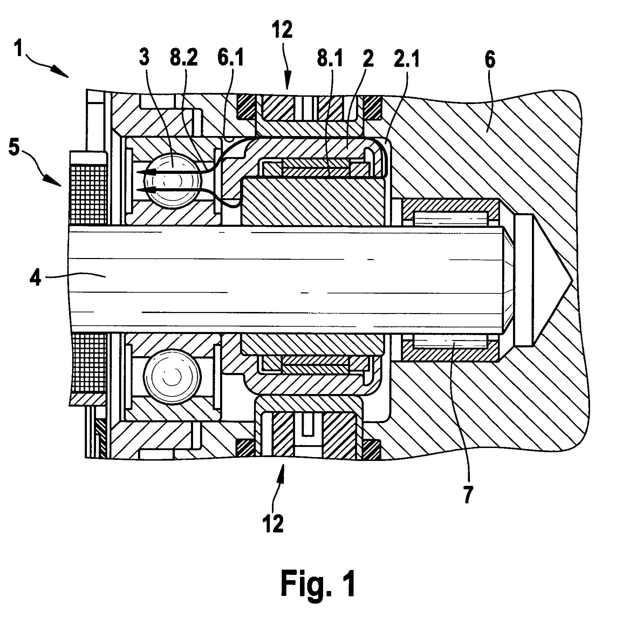

Eine herkömmliche Pumpe ohne Ausgleichsmittel ist in Figur 1 dargestellt. Daraus ersichtlich ist, dass diese herkömmliche Pumpe 1 ein Exzenterlager 2, ein Antriebslager 3, eine Antriebswelle 4, einen elektrischen Antriebsmotor 5, ein Pumpengehäuse 6 mit einer Motorbohrung 6.1 und ein Antriebswellenlager 7 umfasst. Die eingangs beschriebenen Leckagepfade für Druckmittel sind anhand der Pfeile 8.1 und 8.2 veranschaulicht.

In Figur 2 wurden für die einander entsprechenden Bauteile die selben Bezugsziffern verwendet. Erfindungsgemäß modifizierte Bauelemente sind durch einen Hochstrich markiert.

Das Exzenterlager 2 und das Antriebslager 4 sind in einem Exzenterraum 2.1 des Pumpengehäuses 6' angeordnet. Dieser Exzenterraum 2.1 ist anhand einer sacklochartig ausgeführten Motorbohrung 6.1 am Pumpengehäuse 6' ausgebildet. Zwei Pumpenelemente 12 befinden sich in zugeordneten Pumpenbohrungen des Pumpengehäuses 6'. Diese Pumpenbohrungen erstrecken sich zu beiden Seiten des Exzenterraums 2.1 in radialer Richtung und liegen einander fluchtend gegenüber. Ein am Pumpengehäuse 6' angeflanschter Antriebsmotor 5 überdeckt mit einer seiner Stirnseiten die Öffnung der Motorbohrung 6.1 und treibt über die Antriebswelle 4 das Exzenterlager 2 zu einer Rotationsbewegung an. Diese Rotationsbewegung zwingt den Pumpenelementen 12 eine hin- und hergehende Hubbewegung auf.

Am Pumpengehäuse 6' ist als erstes Ausgleichsmittel eine Ringnut 9 eingebracht, welche den Exzenterraum 2.1 vergrößert. Die Ringnut 9 ist am Grund der Motorbohrung 6.1 angeordnet.

Ein zweites Ausgleichsmittel wird von einem nutförmigen Hinterstich 11 gebildet, der an der Wandung der Motorbohrung 6.1 angebracht ist. Dieser Hinterstich 11 ist zum Exzenterraum 2.1 hin offen und vergrößert diesen ebenfalls. Der Hinterstich 11 befindet sich in einem Abschnitt der Wandung der Motorbohrung 6.1, der zwischen dem Exzenterlager 2 und dem Antriebslager 3 liegt. Dieser Bereich der Wandung stellt die kürzest mögliche Verbindung von einem der Pumpenelemente 12 zum Antriebslager 4 des Antriebsmotors 5 dar.

Eine gemäß Figur 2 horizontal verlaufende Mittelachse 13 des Hinterstichs 11 verläuft koaxial zur ebenfalls vertikalen Mittelachse 14 der Motorbohrung 6.1, so dass der Querschnitt des Hinterstichs 11 in Umfangsrichtung konstant ist. Beim dargestellten Ausführungsbeispiel weisen die Ausgleichsmittel 9 und 11 eckige Querschnitte auf. Alternative Ausführungsformen können auch einheitlich mit runden oder mit runden und eckigen Querschnitten ausgeführt sein.

Selbstverständlich wäre es möglich, anstelle des dargestellten einen Hinterstichs 11 auch mehrere parallel nebeneinander liegende Hinterstiche 11 vorzusehen.

Die Ausgleichsmittel 9 und 11 vergrößern den Exzenterraum 2.1 und vermeiden dadurch in vorteilhafter Weise enge Spalten, wodurch eine Kapillarwirkung auf eine entstehende Leckageflüssigkeit unterbunden und jeweils eine Unterbrechung der in Fig. 1 dargestellten Leckagepfade 8.1 bzw. 8.2 der Leckageflüssigkeit zwischen dem Exzenterraum 2.1 und dem elektrischen Antriebsmotor 5 bewirkt wird.

Die Ausgleichsmittel 9, 11 bewirken vielmehr ein Ablaufen der Leckageflüssigkeit in ein Leckagereservoir 10, welches in der gezeigten Einbaulage des Pumpengehäuses 6' an einer gegenüber der Motorbohrung 6.1 tiefer liegenden Stelle angeordnet ist. Dazu sind die Ausgleichsmittel 9, 11 über im Pumpengehäuse 6' geführte Hydraulikverbindungen 15 an dieses Leckagereservoir 10 angeschlossen.

Anhand der vorgeschlagenen Ausgleichsmittel 9, 11 wird bewirkt, dass diese Leckageflüssigkeit nicht in das Exzenterlager 2 und von dort über das Antriebslager 3 in den elektrischen Antriebsmotor 5 gelangen kann. Auch ein direkter Eintritt von Leckageflüssigkeit in das Motorlager 3 wird verhindert.

Durch die Ausgleichsmittel 9, 11 wird die Robustheit des Systems gegenüber einem Bremsflüssigkeitseintrag in eines der Lager 2, 3 und damit die Lebensdauer des elektrischen Antriebsmotors 5, des Exzenterlagers 2 und des Antriebslagers 3 signifikant erhöht.

Die erfindungsgemäße Pumpe kann beispielsweise in einem Hydraulikaggregat eines ABS-System und/oder einem ESP-System verwendet werden.

## Patentansprüche

1. Pumpe, insbesondere für ein Hydraulikaggregat einer elektronisch regelbaren Fahrzeugbremsanlage, mit einem Exzenterlager (2), einem Antriebslager (3), einer Antriebswelle (4), einem elektrischen Antriebsmotor (5) und einem Pumpengehäuse (6'), wobei am Pumpengehäuse (6') ein das Exzenterlager (2) aufnehmender Exzenterraum (2.1) vorgesehen ist, wobei dieser Exzenterraum (2.1) durch eine sacklochartig ausgeführte Motorbohrung (6.1) gebildet ist und wobei Ausgleichsmittel (9, 11) vorgesehen sind, welche diesen Exzenterraum (2.1) vergrößern.
**dadurch gekennzeichnet,**
**dass** die Ausgleichsmittel (9, 11) wenigstens einen nutförmigen Hinterstich (11) umfassen, der an einer Wandung der Motorbohrung (6.1) ausgebildet ist, wobei der wenigstens eine Hinterstich (11) in einem Abschnitt der Wandung der Motorbohrung (6.1) angeordnet ist, der sich zwischen dem Antriebslager (3) und dem Exzenterlager (2) befindet.

2. Pumpe nach Anspruch 1, **dadurch gekennzeichnet, dass** eine Mittelachse (13) des Hinterstichs (11) zu einer Mittelachse (14) der Motorbohrung (6.1) koaxial verläuft.

3. Pumpe nach Anspruch 1 oder 2, **dadurch gekennzeichnet, dass** die Ausgleichsmittel (9, 11) neben dem wenigstens einen Hinterschnitt (11) wenigstens eine am Grund der Motorbohrung (6.1) angeordnete Ringnut (9) umfassen.

4. Pumpe nach einem der Ansprüche 1 bis 3, **dadurch gekennzeichnet, dass** die Ausgleichsmittel (9, 11) durch im Pumpengehäuse (6') ausgebildete Hydraulikverbindungen (15) an ein Leckagedepot (10) angeschlossen sind.

## Claims

1. Pump, particularly for a hydraulic assembly of an electronically controllable vehicle brake system, with an eccentric bearing (2), a drive bearing (3), a drive shaft (4), an electric drive motor (5) and a pump casing (6'), an eccentric space (2.1) which receives the eccentric bearing (2) being provided on the pump casing (6'), this eccentric space (2.1) being formed by a motor bore (6.1) designed in the form of a blind hole, and compensating means (9, 11) being provided which enlarge this eccentric space (2.1), **characterized in that** the compensating means (9, 11) comprise at least one groove-shaped recess (11) which is formed on a wall of the motor bore (6.1), the at least one recess (11) being arranged in a portion of the wall of the motor bore (6.1) which is located between the drive bearing (3) and the eccentric bearing (2).

2. Pump according to Claim 1, **characterized in that** a mid-axis (13) of the recess (11) runs coaxially to a mid-axis (14) of the motor bore (6.1).

3. Pump according to Claim 1 or 2, **characterized in that** the compensating means (9, 11) comprise, in addition to the at least one recess (11), at least one annular groove (9) arranged on the bottom of the motor bore (6.1).

4. Pump according to one of Claims 1 to 3, **characterized in that** the compensating means (9, 11) are connected to a leakage repository (10) by hydraulic connections (15) formed in the pump casing (6').

## Revendications

1. Pompe, en particulier pour une unité hydraulique d'une installation de freinage de véhicule à réglage électronique, comprenant un palier d'excentrique (2), un palier d'entraînement (3), un arbre d'entraînement (4), un moteur d'entraînement électrique (5) et un boîtier de pompe (6'), un espace d'excentrique (2.1) recevant le palier d'excentrique (2) étant prévu sur le boîtier de pompe (6'), cet espace d'excentrique (2.1) étant formé par un alésage de moteur (6.1) réalisé sous forme de trou borgne, et des moyens de compensation (9, 11) étant prévus, lesquels augmentent cet espace d'excentrique (2.1),
**caractérisée en ce que**
les moyens de compensation (9, 11) comprennent au moins un branchement arrière (11) en forme de rainure, qui est réalisé au niveau d'une paroi de l'alésage de moteur (6.1), l'au moins un branchement arrière (11) étant disposé dans une portion de la paroi de l'alésage de moteur (6.1) qui se trouve entre le palier d'entraînement (3) et le palier d'excentrique (2).

2. Pompe selon la revendication 1, **caractérisée en ce qu'**un axe médian (13) du branchement arrière (11) s'étend coaxialement à un axe médian (14) de l'alésage de moteur (6.1).

3. Pompe selon la revendication 1 ou 2, **caractérisée en ce que** les moyens de compensation (9, 11) comprennent, en plus de l'au moins un branchement arrière (11), au moins une rainure annulaire (9) disposée au niveau de la base de l'alésage de moteur (6.1).

4. Pompe selon l'une quelconque des revendications 1 à 3, **caractérisée en ce que** les moyens de compensation (9, 11) sont raccordés à un réservoir de fuite (10) par des liaisons hydrauliques (15) réalisées dans le boîtier de pompe (6').
